**Europäisches Patentamt**

**European Patent Office**

**Office européen des brevets**

(19)

(11) Veröffentlichungsnummer: **0 206 047**
A2

## (12) EUROPÄISCHE PATENTANMELDUNG

(21) Anmeldenummer: **86107699.0**

(22) Anmeldetag: **06.06.86**

(51) Int. Cl.⁴: **B 60 R 9/12**

(30) Priorität: **13.06.85 DE 3521275**

(43) Veröffentlichungstag der Anmeldung: **30.12.86**
**Patentblatt 86/52**

(84) Benannte Vertragsstaaten: **AT BE CH DE FR GB IT LI LU NL SE**

(71) Anmelder: **Tittel, Eberhard, Lagerstrasse 1, D-7981 Grünkraut-Gullen (DE)**

(72) Erfinder: **Tittel, Eberhard, Lagerstrasse 1, D-7981 Grünkraut-Gullen (DE)**

(74) Vertreter: **Schmidt-Evers, Jürgen, Dipl.-Ing. et al, Patentanwälte Dipl.-Ing. H. Mitscherlich Dipl.-Ing. K. Gunschmann Dipl.-Ing. Dr.rer.nat. W. Körber Dipl.-Ing. J. Schmidt-Evers Dipl.-Ing. W. Melzer Steinsdorfstrasse 10, D-8000 München 22 (DE)**

(54) Skiträger.

(57)  Ein vorzugsweise auf einem Autodach zu befestigender Skiträger besteht aus einer Trägerstange 1 mit Halteelementen 19, 20, 30, 31 sowie einem schwenkbaren Klemmarm 4, 35. Zur Befestigung der Skistöcke sind zusätzlich an den Halteelementen 30, 31 oder an dem Klemmarm 4 zusätzliche Ausnehmungen 40 und/oder Klemmvorrichtungen 11 vorgesehen.

EP 0 206 047 A2

6. Juni 1986

SKITRÄGER

Die Erfindung betrifft einen Skiträger, bestehend aus einer vorzugsweise am Dach eines Fahrzeuges befestigbaren Trägerstange, daran befestigten, nach oben offenen Halteelementen zum Einlegen der Ski, sowie einem schwenkbaren der Trägerstange angeordneten und die Halteelemente übergreifenden Klemmarm zum Festklemmen der Ski in den Halteelementen.

Derartige Skiträger sind bekannt. In der Regel werden zwei davon auf dem Dach eines Kraftfahrzeuges befestigt derart, daß sich die Trägerstange quer zur Fahrtrichtung erstreckt.

Während die Ski bequem auf dem Skiträger befestigt werden können, bereitet die Unterbringung der Skistöcke normalerweise Probleme. Üblicherweise werden die Skistöcke im Kofferraum des Kraftfahrzeuges untergebracht und behindern dort das Einstellen von Gepäck oder aber sie werden in umständlicher Weise an den Skiträgern bzw. den von Ihnen getragenen Ski durch Anbinden befestigt.

Der Erfindung liegt die Aufgabe zugrunde, einen Skiträger zu schaffen, welcher eine einfachere und sicherere Halterung und Aufnahme der Skistöcke gewährleistet.

Die Aufgabe ist erfindungsgemäß dadurch gelöst, daß an den Halteelementen oder dem Klemmarm zusätzliche Ausnehmungen und/oder Klemmvorrichtungen für die Skistöcke vorgesehen sind.

Als zusätzliche Klemmvorrichtung kann beispielsweise ein auf dem Klemmarm schwenkbar befestigter Klemmbügel dienen, so daß die Skistöcke zwischen dem Klemmarm und dem Klemmbügel einklemmbar sind.

Um Skistöcke unterschiedlichen Durchmessers sicher und fest festklemmen zu können, kann an der Unterseite des Klemmbügels ein elastischer Belag vorgesehen werden. Ferner können an der Oberseite des Klemmarmes Ausnehmungen zum Einlegen der Skistöcke angeordnet werden.

Eine andere Weiterbildung kann darin bestehen, daß am freien Ende des Klemmarmes ein Verschlußstück angebracht ist, welches zwischen einer Öffnungsstellung und einer Schließstellung verschwenkbar ist, und daß am freien Ende des Klemmbügels sowie dem Verschlußstück des Klemmarmes korrespondierende Verriegelungselemente vorgesehen sind, welche den Klemmbügel freigeben, wenn sich das Verschlußstück in Öffnungsstellung befindet, und welche den Klemmbügel an dem Verschlußstück festhalten, wenn sich dieses in Schließstellung befindet. Auf diese Weise wird gewährleistet, daß der Klemmbügel nur zusammen mit dem Klemmarm geöffnet werden kann und dann, wenn der Klemmarm in Klemmstellung ist, ebenfalls gesichert klemmend auf die Skistöcke drückt.

Ausführungsbeispiele der Erfindung werden nachfolgend anhand der Zeichnungen beschrieben.

0206047

Es zeigen:

Figur 1 eine erste Ausführungsform des Skiträgers,

Figur 2 eine zweite Ausführungsform des Skiträgers.

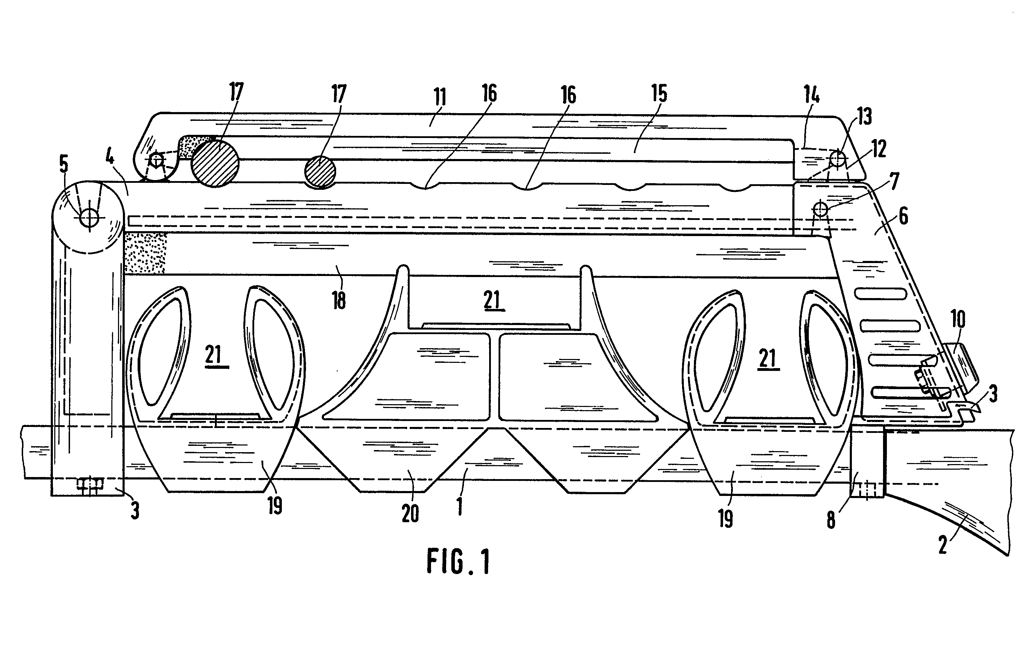

Figur 1 zeigt nur die eine Hälfte des Skiträgers. Die andere sich links anschließende Hälfte ist spiegelsymmetrisch zu der dargestellten Hälfte. Der Skiträger weist eine Trägerstange 1 auf, die an beiden Enden mit einem Stützfuß 2 versehen ist. In der Zeichnung ist der Ansatz des rechtenStützfußes 2 angedeutet. Die Stützfüsse 2 werden normalerweise in die Regenrinne eines Kraftfahrzeuges eingesetzt und dort festgeschraubt. Die Trägerstange erstreckt sich dann quer zur Fahrtrichtung des Kraftfahrzeuges. Es werden jeweils zwei Trägerstangen parallel und mit Abstand auf dem Fahrzeugdach angeordnet.

Auf die Trägerstange 1 sind drei Halteelemente 19,20 aus Gummi für die (nicht dargestellten) Ski aufgeschoben. Jedes der drei Halteelemente 19,20 ist mit einem nach oben offenen Aufnahmeraum 21 für die (nicht dargestellten) Ski versehen. In den beiden äußeren Halteelementen 19 kann je ein Paar Ski hochkant eingesetzt werden. In das mittlere Halteelement 20 kann ein Paar Ski liegend eingebracht werden. Die Halteelemente 20,21 halten die in die Aufnahmeräume eingesetzten Ski gegen seitliche Verschiebung fest.

Ebenfalls auf die Trägerstange 1 aufgeschoben ist ein vertikaler Trägerarm 3, der mit einer Schraube an der Trägerstange 1 in seiner Position festgeklemmt wird. Am oberen Ende des Trägerarmes 3 ist mittels eines Gelenkstiftes 5 das eine Ende eines Klemmarmes 4 angelenkt. Der Klemmarm 4 weist an seiner Unterseite einen elastischen Weichgummistreifen 18 auf, mit dem die Ski von oben auf die Halteelemente 19,20 gedrückt werden können. Am anderen Ende des Klemmarmes 4 ist ein Verschlußstück 6 mittels eines Gelenkstiftes 7 angelenkt. Das Verschlußstück 6 kann um den Gelenkstift 7 zwischen einer Schließstellung (dargestellt) und einer nach rechts geschwenkten Öffnungsstellung verschwenkt werden. Auf der Trägerstange 1 befindet sich ferner ein Haltering 8, welcher eine Verriegelungsnase 9 trägt, die mit dem kappenförmigen Klemmstück 6 korrespondiert, derart, daß sie das Verschlußstück 6 in der dargestellten Schließstellung daran hindert, sich nach oben zu bewegen. Mittels eines Schlosses 10 kann das Verschlußstück 6 in dieser Stellung bleibend arretiert werden.

Auf dem Klemmarm 4 ist ferner ein Klemmbügel 11 gelenkig befestigt. Auch dieser trägt an seiner Unterseite einen elastischen Weichgummistreifen 15. Der Klemmarm ist an seiner Oberseite mit Ausnehmungen 16 zum Einlegen der Skistöcke 17 versehen. In der dargestellten abgesenkten Stellung des Klemmarmes 11 werden die Skistöcke 17 durch den Gummistreifen 15 von oben in die Ausnehmungen 16 gedrückt und in dieser Position festgehalten. Am freien Ende des Klemmbügels 11 ist eine Kulisse 14 vorgesehen, in die ein Riegelstift 13 eingreifen kann, der seitlich von einem auf der Oberseite des Verschlußstückes 6 befindlichen Vorsprung 12 ausgeht. Wenn das Verschlußstück 6 von der dargestellten Schließstellung aus im Gegenuhrzeigersinn um den Gelenkstift 7 in die Öffnungsstellung geschwenkt wird, so bewegt sich der Riegelstift 13 nach links und gleitet aus der Kulissenführung 14 heraus, wodurch der Klemmarm 11 freigegeben wird. Die Stöcke 17 können dann entnommen oder eingelegt werden.

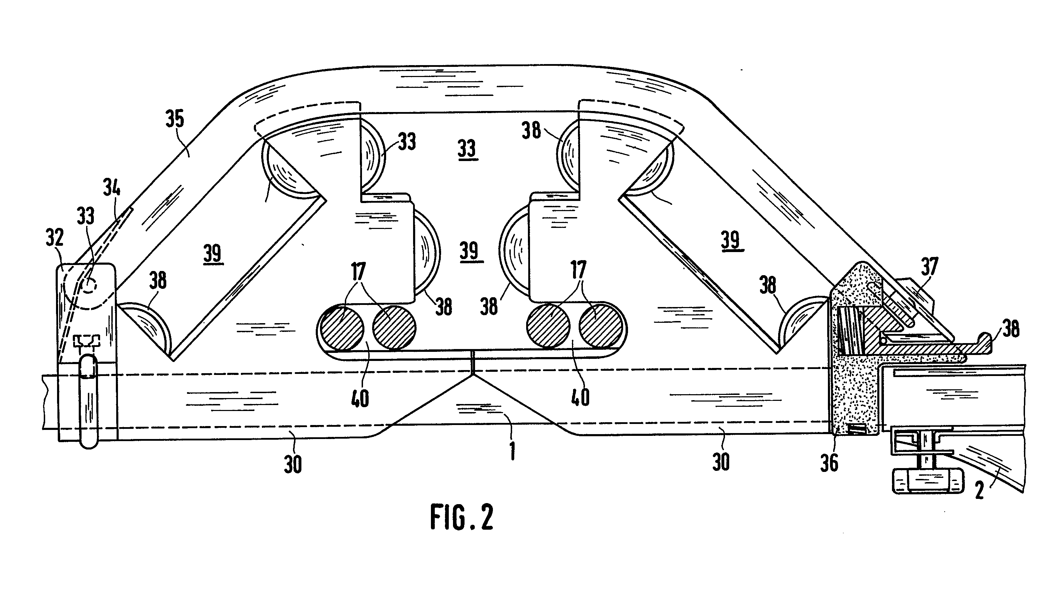

Bei der in Figur 2 dargestellten Ausführungsform sind zwei Halteelemente 30,31 auf die Trägerstange 1 aufgeschoben. Sie bilden vier Aufnahmeräume 39 für (nicht dargestellte) Ski. Zum Festklemmen der Ski erstrecken sich elastische Hohlkörper 38 in den Aufnahmeraum. Die elastischen Hohlkörper 38 sind durch die einlegbaren Ski verformbar. Die Ski können in der Mitte hochkant oder liegend angeordnet werden. Zur Unterbringung der Skistöcke 17 sind hier in den beiden Halteelementen 30,31 Ausnehmungen 40 vorgesehen.

Auch hier ist auf die Trägerstange 1 ein Stützarm 32 aufgeschoben und mittels einer Schraube arretiert. Der Stützarm 32 trägt einen Klemmarm 35, der bei dieser Ausführungsform nicht gerade ist, sondern an seinen beiden Endbereichen abgewinkelt ist. Der Klemmarm 35 ist an dem Stützarm 32 um einen Gelenkstift 33 schwenkbar. Eine Feder 34 versucht den Klemmarm 35 in die (nicht dargestellte) Öffnungsstellung zu drücken.

Ebenfalls auf die Trägerstange 1 aufgeschoben ist ein Halteteil 36 für eine Rastnase 38, die gegenüber dem Halteteil 36 gegenüber der dargestellten Stellung entgegen der Wirkung der Kraft einer Feder nach links verschiebbar ist. Mittels eines Schlosses 37 kann der Klemmarm 35 in der Schließstellung arretiert werden.

0206047

ANSPRÜCHE

1. Skiträger, bestehend aus einer vorzugsweise am Dach eines Fahrzeuges befestigbaren Trägerstange, daran befestigten nach oben offenen Halteelementen zum Einlegen der Ski, sowie einem schwenkbar an der Trägerstange angeordneten und die Halteelemente übergreifenden Klemmarm zum Festklemmen der Ski in den Halteelementen, **dadurch gekennzeichnet,** daß an den Halteelementen (19, 20;30,31) oder dem Klemmarm (4;35) zusätzliche Ausnehmungen (40) und/oder Klemmvorrichtungen (11) für die Skistöcke (17) vorgesehen sind.

2. Skiträger nach Anspruch 1, dadurch gekennzeichnet, daß auf dem Klemmarm (4) ein Klemmbügel (11) schwenkbar befestigt ist, so daß die Skistöcke (17) zwischen dem Klemmarm (4) und dem Klemmbügel (11) einklemmbar sind.

3. Skiträger nach Anspruch 2, dadurch gekennzeichnet, daß der Klemmbügel (11) an seiner Unterseite mit einem elastischen Belag (15) versehen ist.

4. Skiträger nach Anspruch 2 oder 3, dadurch gekennzeichnet, daß der Klemmarm (4) an seiner Oberseite Ausnehmungen (16) zum Einlegen der Skistöcke (17) aufweist.

5. Skiträger nach einem der Ansprüche 2 bis 4, dadurch gekennzeichnet, daß am freien Ende des Klemmarmes (4) ein Verschlußstück (6) angebracht ist, welches zwischen einer Öffnungsstellung und einer Schließstellung verschwenkbar ist, und daß am freien Ende des Klemmbügels (11) sowie an dem Verschlußstück (6) des Klemmarms (4) korrespondierende Verriegelungselemente (13,14) vorgesehen sind, welche den Klemmbügel (11) freigeben, wenn sich das Verschlußstück (6) in Öffnungsstelung befindet, und welche den Klemmbügel (11) an dem Verschlußstück (6) festhalten, wenn sich dieses in Schließstellung befindet.

FIG.1

0206047

FIG.2